# EUROPÄISCHE PATENTSCHRIFT

(11) **EP 3 501 048 B1**
(45) Veröffentlichungstag und Bekanntmachung des Hinweises auf die Patenterteilung: **15.04.2020**
(21) Anmeldenummer: 17755495.3
(22) Anmeldetag: 21.08.2017
(51) Int. Cl.: H01M 2/10

(54) **DRUCKNEUTRALE ENERGIEVERSORGUNGSVORRICHTUNG AUF AKKUMULATORBASIS FÜR DEN UNTERWASSEREINSATZ**
BATTERY-BASED PRESSURE NEUTRAL ENERGY SUPPLY DEVICE FOR UNDERWATER USE
PRESSION BASÉE SUR LA BATTERIE APPAREIL D'APPROVISIONNEMENT ÉNERGÉTIQUE NEUTRE POUR L'UTILISATION SOUS-MARINE

(30) Priorität: 22.08.2016 DE 102016215713
(43) Veröffentlichungstag der Anmeldung: 26.06.2019
(73) Patentinhaber: thyssenkrupp Marine Systems GmbH, 24143 Kiel (DE); thyssenkrupp AG, 45143 Essen (DE)
(72) Erfinder: FRÜHLING, Christian, 24103 Kiel (DE); SCHIEMANN, Marc, 24145 Kiel (DE); WEHNER, Willem Hendrik, 24143 Kiel (DE)
(74) Vertreter: thyssenkrupp Intellectual Property GmbH
(86) Internationale Anmeldenummer: PCT/EP2017/071023
(87) Internationale Veröffentlichungsnummer: WO 2018/036960

(56) Entgegenhaltungen:
- WO-A1-2013/103679
- JP-A- 2001 307 691
- US-A- 5 876 872

## Beschreibung

Die Erfindung betrifft eine Energieversorgungsvorrichtung, welche aus elektrochemischen Zellen als Energiespeicher und ohne Druckkörper für den Einsatz bei hohen Umgebungsdrücken ausgeführt ist.

Aus der DE 10 2015 000 257 A1 ist eine Energieversorgungsvorrichtung mit einem Druckkörper bekannt.

Aus der US 2014 / 027 475 A ist ein Unterwasserfahrzeug mit einer Batterie bekannt.

Aus der WO 2013 / 103 679 A1 ist eine drucktolerante Batterie mit einem Gehäuse, einer Lithium-Polymer-Zelle und einem dielektrischen Fluid bekannt.

Aus der JP 2001 307 691 A ist eine ölgefüllte Batterie bekannt.

Aus der US 5,876,872 ist eine Batterie für den Einsatz unter Wasser bei erhöhtem Druck bekannt.

Die Verwendung von Druckkörpern schränkt die geometrischen Optionen praktisch auf eine Zylindergeometrie ein. Hinzu kommt, dass der Druckkörper selber ein großes Gewicht aufweist. Dieses verteuert die Herstellung sowie den Transport.

Die Dissertation von Herrn Chakrabarti (abzurufen unter http://dx.doi.org/10.14279/depositonce-4647) gibt eine Übersicht über druckneutrale Systeme.

Aufgabe der Erfindung ist es, eine Energieversorgungsvorrichtung für den Unterwassereinsatz mit einer hohen volumetrischen und gravimetrischen Energiedichte bereitzustellen.

Gelöst wird diese Aufgabe durch eine Energieversorgungsvorrichtung mit den in Anspruch 1 angegebenen Merkmalen. Vorteilhafte Weiterbildungen ergeben sich aus den Unteransprüchen, der nachfolgenden Beschreibung sowie den Zeichnungen.

Die erfindungsgemäße Energieversorgungsvorrichtung für den Unterwassereinsatz weist wenigstens ein erstes Gehäuse auf. Die Energieversorgungsvorrichtung weist eine Vielzahl von elektrochemischen Zellen auf. Die Energieversorgungsvorrichtung weist weiter an der Außenseite des ersten Gehäuses wenigstens eine erste elektrische Steckverbindung auf. Das erste Gehäuse der Energieversorgungsvorrichtung ist blasenfrei mit einem gering kompressiblen Fluid befüllt. Das erste Gehäuse weist eine Befüllvorrichtung zum Befüllen mit dem gering kompressiblen Fluid und eine Ablassvorrichtung zum Ablassen des gering kompressiblen Fluids auf. Das erste Gehäuse weist eine Druckkompensationsvorrichtung auf.

Unter einem gering kompressiblen Fluid wird im Sinne der Erfindung ein Fluid verstanden, welches bei einer Änderung des Drucks von Umgebungsdruck (0,1 MPa) auf 50 MPa eine Volumenänderung von weniger als 25 %, bevorzugt von weniger als 10 % besonders bevorzugt von weniger als 5 %, ganz besonders bevorzugt von weniger als 2 % aufweist. Gase sind üblicherweise kompressibel, wohingegen Flüssigkeiten als gering kompressibel anzusehen sind.

Unter einer Druckkompensationsvorrichtung wird im Sinne der Erfindung eine Einrichtung verstanden, die mit dem Umgebungsdruck derart wirkverbunden ist, dass bei Druckunterschieden zwischen der Umgebung und dem Innenbereich des ersten Gehäuses der Druck des Innenbereichs dem Außendruck annähernd angeglichen wird beziehungsweise eine vorgegebene Druckdifferenz eingestellt wird.

Die Befüllvorrichtung zum Befüllen mit dem gering kompressiblen Fluid kann in Form eines Einfüllstutzens ausgeführt sein. Die Ablassvorrichtung zum Ablassen des gering kompressiblen Fluids kann in Form eines Auslassventils ausgeführt sein.

In einer weiteren Ausführungsform der Erfindung sind die elektrochemischen Zellen im Taschenformat, sogenannte Pouch-Zellen, ausgebildet. Hierdurch sind die elektrochemischen Zellen deutlich geeigneter für den Einsatz bei hohen Drücken im Vergleich zum klassischen gerollten Aufbau.

In einer weiteren Ausführungsform der Erfindung sind die elektrochemische Zellen Lithium-Ionen-, Lithium-Polymer-, Lithium-Eisenphosphat-, Lithium-Kobaltoxid-, Lithium-Manganoxid-, Lithium-Mangan-Kobaltoxid-, Lithium-Nickel-Kobalt-Aluminiumoxid-, Lithium-Schwefel-, Nickel-Kobalt-Aluminiumoxid-Zellen. Bevorzugt sind es Lithium-Eisenphosphat-Zellen oder Lithium-Manganoxid-Zellen, besonders bevorzugt Lithium-Eisenphosphat-Zellen.

In einer weiteren Ausführungsform der Erfindung weisen die elektrochemischen Zellen eine Graphit-Anode oder eine Lithiumtitanat-Anode auf, wobei eine Graphit-Anode bevorzugt ist.

In einer weiteren Ausführungsform der Erfindung ist das erste Gehäuse im getauchten Zustand stapelbar. Da unter Wasser der Auftrieb zu einer geringeren Belastung beim Stapeln führt, kann es vorteilhaft sein, das erste Gehäuse beispielsweise entsprechend einem ISO-Container nach ISO 668 stapelbar auszuführen, auch wenn an Land die Statik eine Stapelbarkeit nicht erlaubt.

Insbesondere kann vorgesehen sein, dass das erste Gehäuse eine Kopplungseinrichtung aufweist, die über eine Fernwirkleitung automatisiert betätigbar ist. Es ist dadurch möglich mehrere Energieversorgungseinrichtungen an ihrem Aufstellungsort aufeinander zu stapeln und miteinander zu koppeln.

In einer weiteren Ausführungsform der Erfindung besteht das erste Gehäuse aus einem oder mehreren Materialen, wobei die Materialien ausgewählt sind aus der Gruppe umfassend Stahl, Aluminium, Aluminiumlegierungen, Titan, Titanlegierungen, Kunststoff, Verbundmaterialien, insbesondere glasfaserverstärkte Kunststoffe oder kohlefaserverstärkte Kunststoffe.

Bei Stahl kann es sich beispielsweise es sich um einen Stahl mit einem Kohlenstoffanteil unter 0,05 %, einen Siliziumanteil ≤ 1 %, einem Mangananteil ≤ 2 %, einem Phosphoranteil ≤ 0,045 %, einem Schwefelanteil ≤ 0,015 %, einem Chromanteil von 16,5 bis 18,5 %, einem Molybdänanteil von 2,5 bis 3 %, einem Nickelanteil von 10,5 bis 13 % und einem Stickstoffanteil ≤ 0,011 % handeln. In diesem Fall ergibt sich eine Härte HB von 215 und ein Elastizitätsmodul von 200 kN/mm². Beispielsweise handelt es sich um einen Stahl mit einem Kohlenstoffanteil unter 0,03 %, einen Siliziumanteil ≤ 1 %, einem Mangananteil ≤ 2 %, einem Phosphoranteil ≤ 0,035 %, einem Schwefelanteil ≤ 0,015 %, einem Chromanteil von 21 bis 23 %, einem Molybdänanteil von 2,5 bis 3,5 %, einem Nickelanteil von 4,5 bis 6,5 % und einem Stickstoffanteil von 0,1 bis 0,22 %. In diesem Fall ergibt sich eine Härte HB von 270 und ein Elastizitätsmodul von 200 kN/mm². Verschiedene Bestandteile können aus dem gleichen Stahl oder aus verschiedenen Stählen bestehen.

In einer weiteren Ausführungsform der Erfindung ist das erste Gehäuse evakuierbar. Um das erste Gehäuse blasenfrei mit einem gering kompressiblen Fluid befüllen zu können, ist es vorteilhaft das erste Gehäuse vor dem Befüllen zu evakuieren. Dazu muss das erste Gehäuse so ausgebildet sein, dass es einen Unterdruck von vorzugsweise 1 bar standhält.

In einer weiteren Ausführungsform der Erfindung ist das erste Gehäuse, sowie verwendete Konstruktionselemente für den Einsatz als fluidkompensiertes druckneutrales System optimiert. Insbesondere Schweiß- und Schraubverbindungen sind so gestaltet, dass keine Kavitäten entstehen können.

In einer weiteren Ausführungsform der Erfindung ist das erste Gehäuse blitzschlagsicher ausgeführt. Bei einem Transport über Land oder über Wasser muss vermieden werden, dass es zu einer Überladung der Zellen kommt, da hierdurch die Feuergefahr erhöht wird. Daher sind Maßnahmen zur Vermeidung der Aufnahme elektrischer Energie aus einem Blitz sinnvoll.

In einer weiteren Ausführungsform der Erfindung ist das gering kompressible Fluid ausgewählt aus der Gruppe umfassend Mineralöl, Silikonöl, insbesondere dünnflüssiges Silikonöl, Pentaerythrittetrafettsäureester. Besonders bevorzugt sind dünnflüssiges Silikonöl und Pentaerythrittetrafettsäureester.

Pentaerythrittetrafettsäureester sind vollständig biologisch abbaubar. Daher besteht selbst im Havariefall unter Wasser keine Gefahr für die Umwelt.

Silikonöl weist sich durch besonders gute Langzeitstabilität aus.

In einer weiteren Ausführungsform der Erfindung weist die Druckkompensationsvorrichtung ein Ausgleichsvolumen von höchstens 10 %, bevorzugt von höchstens 5 %, besonders bevorzugt von höchstens 2% des Innenvolumens des ersten Gehäuses auf. Insbesondere kann vorgesehen sein, dass das Ausgleichsvolumen der Druckkompensationsvorrichtung mindestens so groß ist, dass die Kompression des gering kompressiblen Fluids und der im ersten Gehäuse innenliegenden Komponenten, wie beispielsweise weiterer Druckkörper oder elektrochemischer Zellen, bei maximalem Tauchdruck bzw. Tauchtiefe kompensiert werden kann.

In einer weiteren Ausführungsform der Erfindung sind Komponenten mit hoher Wartungsintensität außerhalb des ersten Gehäuses angeordnet.

Zusätzlich zu elektrochemischen Zellen kann die erfindungsgemäße Energieversorgungsvorrichtung Leistungselektronik aufweisen. Als Leistungselektronik können vor allem Steuer- und Überwachungsvorrichtung, Leistungsschalter, Stromrichter, Balancing-Vorrichtungen und/oder Kommunikationsvorrichtungen zu einer entfernt liegenden Steuerzentrale vorgesehen sein.

In einer weiteren Ausführungsform der Erfindung weist die Energieversorgungsvorrichtung einen Druckkörper zur Aufnahme druckempfindlicher Komponenten auf. Da nur wenige Komponenten in dem Druckkörper angeordnet sein müssen, kann dieser vergleichsweise klein und damit auch leicht ausgeführt werden.

In einer weiteren Ausführungsform der Erfindung ist die Leistungselektronik, ein Steuercomputer und/oder ein Stromrichter in einem oder mehreren zweiten Gehäuse außerhalb des ersten Gehäuses angeordnet, wobei das zweite Gehäuse als Druckkörper ausgebildet ist.

In einer weiteren Ausführungsform der Erfindung ist die Leistungselektronik, ein Steuercomputer und/oder ein Stromrichter druckneutral ausgebildet.

In einer weiteren Ausführungsform der Erfindung ist das zweite Gehäuse mit einem wärmeübertragenden Fluid gefüllt. Bei dem wärmeübertragenden Fluid kann es sich um ein Gas, insbesondere Helium, oder eine Flüssigkeit, insbesondere ein Silikonöl, oder eine Wärmeleitpaste handeln.

In einer weiteren Ausführungsform der Erfindung ist das zweite Gehäuse von einem vierten Gehäuse umgeben, welches eine Verbindung zur Umgebung aufweist, also im getauchten Zustand hinterspült ist. Das erste Gehäuse und das vierte Gehäuse bilden vorzugsweise gemeinsam die Struktur eines ISO-Containers.

In einer weiteren Ausführungsform der Erfindung ist Leistungselektronik in einem dritten Gehäuse innerhalb des ersten Gehäuses angeordnet, wobei das dritte Gehäuse als Druckkörper ausgebildet ist. Hierdurch wird zum einen die Geometrie des ersten Gehäuses nicht verändert, was vorteilhaft ist, wenn es sich bei dem ersten Gehäuse um ein Gehäuse in der Form eines ISO-Containers handelt. Zum anderen kann der Druckkörper vergleichsweise klein und damit leicht ausfallen, da dieser nur die Leistungselektronik aufnehmen muss.

In einer weiteren Ausführungsform ist die Leistungselektronik druckneutral ausgeführt und im ersten Gehäuse angeordnet. Druckneutral im Sinne der Erfindung bedeutet, dass die Leistungselektronik ohne druckfestes Gehäuse in inkompressiblen Elastomeren, wie zum Beispiel Silikon oder Polyurethan, im ersten Gehäuse gelagert wird und gegenüber dem Umgebungsdruck unempfindlich ist.

Erfindungsgemäß wird die Druckkompensationsvorrichtung durch wenigstens einen zylindrischen Druckausgleichsbehälter, vorzugsweise durch zwei zylindrische Druckausgleichsbehälter, gebildet. Der Druckausgleichsbehälter enthält eine Vorrichtung, die im Inneren des ersten Gehäuses ein gegenüber der Umgebung erhöhten Druck aufrecht erhält.

In einer weiteren Ausführungsform der Erfindung weist der zylindrische Druckausgleichsbehälter einen mit einer Feder vorgespannten Kolben auf, wobei die Feder so angeordnet ist, dass im Inneren des ersten Gehäuses ein gegenüber der Umgebung erhöhter Druck entsteht.

In einer weiteren Ausführungsform der Erfindung weist die Druckkompensationsvorrichtung einen Druckausgleichsbehälter mit einer flexiblen Membran auf. Die Membran ist vorgespannt, beispielsweise mittels eines druckbeaufschlagten Reservoirs oder einer Feder.

In einer weiteren Ausführungsform der Erfindung weist die Druckkompensationsvorrichtung einen Druckausgleichsbehälter mit einem flexiblen Behälter auf. Der Behälter kann über eine Vordehnung einen erhöhten Druck innerhalb des Containers gewährleisten.

In einer weiteren Ausführungsform der Erfindung ist der Druck um weniger als 10 kPa, bevorzugt um weniger als 5 kPa, erhöht. Die Erhöhung des Drucks im Inneren führt dazu, dass im Havariefall zunächst kein salzhaltiges Meerwasser in das erste Gehäuse eindringen kann. Hierdurch werden die elektrochemischen Zellen sowie die weiteren Komponenten geschützt.

In einer weiteren Ausführungsform der Erfindung weisen die elektrochemischen Zellen einen Elektrolyten auf, wobei der Elektrolyt ein Lösemittel aufweist, wobei das Lösemittel ausgewählt ist aus der Gruppe umfassend Dimethylcarbonat, Diethylcarbonat, Ethylmethylcarbonat, Ethylencarbonat.

In einer weiteren Ausführungsform der Erfindung weisen die elektrochemischen Zellen eine Länge, eine Breite und eine Höhe auf, wobei die Länge zwischen 5 cm und 100 cm, bevorzugt zwischen 20 cm und 40 cm, liegt, wobei die Breite zwischen 5 cm und 50 cm, bevorzugt zwischen 10 cm und 30 cm, liegt, wobei die Dicke zwischen 1 mm und 50 mm, bevorzugt zwischen 5 mm und 20 mm, liegt.

In einer weiteren Ausführungsform der Erfindung weisen die elektrochemischen Zellen jeweils eine Kapazität von 10 Ah bis 100 Ah, bevorzugt zwischen 30 Ah und 50 Ah, auf. Je größer die einzelne Zelle ist, desto weniger aufwändig wird das Batteriemanagement. Auf der anderen Seite nimmt die Schwierigkeit bei der Herstellung gerade beim bevorzugten Zelltyp mit der Größe zu, sodass diese Kapazität ein Optimum aus diesen beiden Größen darstellt.

In einer weiteren Ausführungsform der Erfindung werden jeweils 80 bis 120 elektrochemische Zellen zu einem Modul elektrisch verbunden. Weiter bevorzugt werden jeweils 8 bis 15 Module zu einem Kompartiment elektrisch verbunden. Weiter bevorzugt werden jeweils 15 bis 20 Kompartiments zu einer Gesamteinheit elektrisch verbunden.

Besonders bevorzugt sind Kompartiments als einzeln austauschbare Bauteile ausgeführt, sodass Kompartiments standardisiert herstellbar sind und im Bedarfsfall leicht ausgetauscht werden können. Kompartiments haben vorzugsweise einen Rahmen oder Gehäuse, über welches die Kompartiments miteinander und/oder mit dem ersten Gehäuse verbindbar sind. Besonders bevorzugt weisen die Kompartiments Verankerungspunkte für eine maschinelle Verbringung, beispielsweise mittels Kran oder Gabelstapler, auf.

Insbesondere werden 96 elektrochemische Zellen zu einem Modul parallel geschaltet, 12 Module zu einem Kompartiment in Reihe geschaltet und 18 Kompartiments zu einer Gesamteinheit in Reihe geschaltet.

In einer weiteren Ausführungsform der Erfindung weist die Energieversorgungsvorrichtung ein Batteriemanagementsystem auf, welches insbesondere ein Überladen der Zellen verhindert und damit die Brandgefahr zu minimieren.

In einer weiteren Ausführungsform der Erfindung weist die Energieversorgungsvorrichtung wenigstens einen Balancer (Zellen-Ladungszustands-Ausgleicher) auf. Ein Balancer dient dazu, unterschiedliche Ladungszustände der Zellen auszugleichen
In einer weiteren Ausführungsform der Erfindung kann der Balancer passiv, über Widerstände einen Ausgleich herstellen. Je ein Kompartiment teilt sich einen Balancer samt Widerstand.

In einer weiteren Ausführungsform der Erfindung stehen die Widerstände mit der Außenhaut des Containers in Kontakt um die Wärme direkt an die Containerumgebung abzuführen.

In einer alternativen Ausführungsform kann der Balancer aktive elektrische Bauelemente aufweisen und Ladungszustände ausgleichen.

In einer weiteren Ausführungsform der Erfindung sind die verschiedenen Bestandteile, welche sich im Inneren des ersten Gehäuses befinden, in Gruppen angeordnet, wobei jede Gruppe für sich alleine transportfähig ausgebaut ist. Besonders bevorzugt hat jede Gruppe einen Querschnitt welcher geringfügig kleiner ist als der Querschnitt des ersten Gehäuses. Beispielsweise werden alle Bestandteile in drei, vier oder fünf Gruppen angeordnet. Die Gruppen werden hintereinander in das erste Gehäuse eingebracht und in der finalen Position miteinander und/oder mit dem ersten Gehäuse verbunden. Beispielsweise weist die Energieversorgungsvorrichtung vier Gruppen auf, wobei die erste Gruppe, die zweite Gruppe und die dritte Gruppe jeweils beispielhaft sechs Kompartiments aufweisen. Die vierte Gruppe weist beispielsweise einen DC/DC-Wandler, einen Leitrechner und gegebenenfalls weitere Komponenten auf.

In einer weiteren Ausführungsform der Erfindung ist die Energieversorgungsvorrichtung für Transport und/oder Lagerung und/oder Ladung mit einem Kühlsystem verbindbar. Besonders bevorzugt erfolgt die Verbindung über die Befüllvorrichtung zum Befüllen mit dem gering kompressiblen Fluid und die Ablassvorrichtung zum Ablassen des gering kompressiblen Fluids. Besonders bevorzugt kann das Kühlsystem analog einem mit einem ISO-Container verbindbarem Kühlsystem ausgebildet sein.

In einer weiteren Ausführungsform der Erfindung weist das erste Gehäuse an der Außenseite wenigstens stellenweise Kühlrippen auf.

In einer weiteren Ausführungsform der Erfindung weist die Energieversorgungsvorrichtung wenigstens eine erste Umwälzvorrichtung zur passiven Umwälzung des gering kompressiblen Fluids auf. Bei der wenigstens einen ersten Umwälzvorrichtung kann es sich um ein Leitblech handeln, welches die thermische Konvektion unterstützt.

In einer weiteren Ausführungsform der Erfindung weist die Energieversorgungsvorrichtung wenigstens eine zweite Umwälzvorrichtung zur aktiven Umwälzung des gering kompressiblen Fluids auf. Bevorzugt weist die wenigstens eine zweite Umwälzvorrichtung wenigstens eine Pumpvorrichtung, bevorzugt eine Zahnradpumpe, auf.

In einer weiteren Ausführungsform der Erfindung weist die Energieversorgungsvorrichtung eine erste Umwälzvorrichtung und eine zweite Umwälzvorrichtung auf. Besonders bevorzugt weist die Energieversorgungsvorrichtung zusätzlich eine Temperaturüberwachungsvorrichtung und eine Ansteuervorrichtung für die zweite Umwälzvorrichtung auf. Übersteigt die Temperatur ein gewisses Maß, so wird die zweite Umwälzvorrichtung aktiviert. Bei geringerer Temperatur wird diese zum Energiesparen deaktiviert.

In einer weiteren Ausführungsform der Erfindung weist die Energieversorgung eine aktive Kühlvorrichtung auf, wobei die aktive Kühlvorrichtung zur Kühlung der Energieversorgungsvorrichtung über Wasser oder an Land verwendbar ist. Bevorzugt ist die Kühlvorrichtung ein Luft-Luft-Wärmetauscher oder ein Wasser-Luft-Wärmetauscher, der die Abwärme über Wasser oder an Land an die Umgebungsluft abgibt. Beim Einsatz der Energieversorgungsvorrichtung unter Wasser ist vorzugsweise die Kühlung über die Wände des ersten Gehäuses ausreichend. Die aktive Kühlvorrichtung kann in einer besonderen Ausführungsform trennbar mit dem ersten Gehäuse verbindbar sein. Vorteil dieser Ausführungsform ist, dass die aktive Kühlvorrichtung nicht für den Betrieb unter Wasser ausgelegt sein muss.

In einer weiteren Ausführungsform der Erfindung weist das erste Gehäuse die Außenmaße eines 20-Fuss-Containers von etwa 6 m mal 2,4 m mal 2,6 m oder die Außenmaße eines 40-Fuss-Containers von etwa 12 m mal 2,4 m mal 2,6 m auf. Besonders bevorzugt weist das erste Gehäuse auch die Verbindungsvorrichtungen eines ISO-Containers gemäß ISO 668.

In einer weiteren Ausführungsform der Erfindung weist die Energieversorgungsvorrichtung eine senkrechte mittlere Achse auf, wobei die senkrechte mittlere Achse zur Aufnahme der Hauptleitungen und zur freien Konvektion des gering kompressiblen Fluids ausgebildet ist.

In einer weiteren Ausführungsform der Erfindung weist die Energieversorgungsvorrichtung eine erste elektrische Steckverbindung und eine zweite elektrische Steckverbindung auf, wobei die erste elektrische Steckverbindung als elektrischer Ausgang und die zweite elektrische Steckverbindung als elektrischer Eingang ausgeführt ist.

Nachfolgend ist die erfindungsgemäße Energieversorgungsvorrichtung anhand eines in der Zeichnung dargestellten Ausführungsbeispiels näher erläutert.

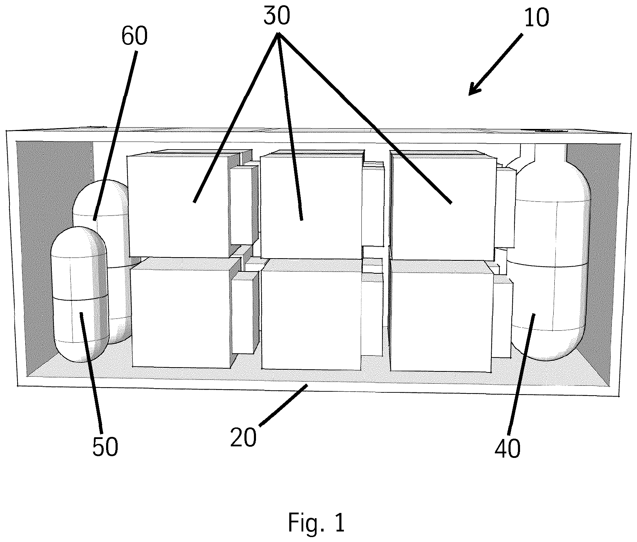

### Fig. 1 seitliche Ansicht einer beispielhaften Energieversorgungsvorrichtung

Die in Fig. 1 gezeigte Energieversorgungsvorrichtung 10 ist unter Weglassung einer Seitenwand des ersten Gehäuses 20. Das erste Gehäuse 20 hat die Form eines 40 Fuß ISO-Containers. Das erste Gehäuse 20 ist so ausgebildet, dass das erste Gehäuse 20 einem Druck von 110 kPa standhält. Hierdurch kann das erste Gehäuse 20 evakuiert werden sowie unter Wasser mit einem leichten Überdruck betrieben werden. Im Inneren befinden sich Kompartiments 30, welche aus 12 in Reihe geschalteten Modulen bestehen, wobei die Module jeweils aus 96 parallel geschalteten elektrochemischen Zellen bestehen. Das Innere des ersten Gehäuses 20 ist mit einem gering kompressiblen Fluid gefüllt. Über zwei Druckkompensationsvorrichtungen 40 wird der Innendruck ungefähr auf dem Niveau des Außendrucks gehalten. Hierzu weisen die Druckkompensationsvorrichtungen 40 jeweils eine Verbindung zur Umgebung an der Oberseite des ersten Gehäuses 20 auf. Die Druckkompensationsvorrichtungen 40 sorgen für einen geringen Überdruck von 1 kPa im Inneren des ersten Gehäuses. Zusätzlich weist die Energieversorgungsvorrichtung 10 einen Steuercomputer 50 und einen Stromrichter 60 auf, wobei der Steuerungscomputer 50 und der Stromrichter 60 jeweils in einem weiteren Gehäuse innerhalb des ersten Gehäuses 20 angeordnet sind, wobei die weiteren Gehäuse Druckkörper sind.

### Bezugszeichen

- 10: Energieversorgungsvorrichtung
- 20: erstes Gehäuse
- 30: Kompartiment
- 40: Druckkompensationsvorrichtung
- 50: Steuercomputer
- 60: Stromrichter

## Patentansprüche

1. Energieversorgungsvorrichtung (10) für den Unterwassereinsatz, wobei die Energieversorgungsvorrichtung (10) wenigstens ein erstes Gehäuse (20) aufweist, wobei die Energieversorgungsvorrichtung (10) eine Vielzahl von elektrochemischen Zellen aufweist, wobei die Energieversorgungsvorrichtung (10) an der Außenseite des ersten Gehäuses (20) wenigstens eine erste elektrische Steckverbindung aufweist, wobei das erste Gehäuse (20) der Energieversorgungsvorrichtung (10) blasenfrei mit einem gering kompressiblen Fluid befüllt ist, wobei das erste Gehäuse (20) eine Befüllvorrichtung zum Befüllen mit dem gering kompressiblen Fluid und eine Ablassvorrichtung zum Ablassen des gering kompressiblen Fluids aufweist, wobei das erste Gehäuse (20) eine Druckkompensationsvorrichtung (40) aufweist, **dadurch gekennzeichnet, dass** die Druckkompensationsvorrichtung (40) durch wenigstens einen zylindrischen Druckausgleichsbehälter gebildet wird, wobei der Druckausgleichsbehälter eine Vorrichtung enthält, die im Inneren des ersten Gehäuses (20) ein gegenüber der Umgebung erhöhten Druck aufrecht erhält.

2. Energieversorgungsvorrichtung (10) nach Anspruch 1, **dadurch gekennzeichnet, dass** die elektrochemischen Zellen im Taschenformat ausgebildet sind.

3. Energieversorgungsvorrichtung (10) nach einem der vorstehenden Ansprüche, **dadurch gekennzeichnet, dass** das erste Gehäuse (20) im getauchten Zustand stapelbar ist.

4. Energieversorgungsvorrichtung (10) nach einem der vorstehenden Ansprüche, **dadurch gekennzeichnet, dass** das erste Gehäuse (20) evakuierbar ist.

5. Energieversorgungsvorrichtung (10) nach einem der vorstehenden Ansprüche, **dadurch gekennzeichnet, dass** die Druckkompensationsvorrichtung (40) ein Ausgleichsvolumen von höchstens 10 %, bevorzugt von höchstens 5 %, besonders bevorzugt von höchstens 2 % des Innenvolumens des ersten Gehäuses (20) aufweist.

6. Energieversorgungsvorrichtung (10) nach einem der vorstehenden Ansprüche, **dadurch gekennzeichnet, dass** Komponenten mit hoher Wartungsintensität außerhalb des ersten Gehäuses (20) angeordnet sind.

7. Energieversorgungsvorrichtung (10) nach Anspruch 6, **dadurch gekennzeichnet, dass** Leistungselektronik in einem zweiten Gehäuse außerhalb des ersten Gehäuses (20) angeordnet ist, wobei das zweite Gehäuse als Druckkörper ausgebildet ist.

8. Energieversorgungsvorrichtung (10) nach einem der Ansprüche 1 bis 6, **dadurch gekennzeichnet, dass** Leistungselektronik im einem dritte Gehäuse innerhalb des ersten Gehäuses (20) angeordnet ist, wobei das dritte Gehäuse als Druckkörper ausgebildet ist.

9. Energieversorgungsvorrichtung (10) nach einem der vorstehenden Ansprüche, **dadurch gekennzeichnet, dass** die Druckkompensationsvorrichtung (40) durch wenigstens zwei zylindrische Druckausgleichsbehälter gebildet wird.

10. Energieversorgungsvorrichtung (10) nach Anspruch 9, **dadurch gekennzeichnet, dass** der Druck um weniger als 10 kPa, bevorzugt um weniger als 5 kPa, erhöht ist.

11. Energieversorgungsvorrichtung (10) nach einem der vorstehenden Ansprüche, **dadurch gekennzeichnet, dass** die elektrochemischen Zellen jeweils eine Kapazität von 10 Ah bis 100 Ah, bevorzugt zwischen 30 Ah und 50 Ah, aufweisen.

12. Energieversorgungsvorrichtung (10) nach einem der vorstehenden Ansprüche, **dadurch gekennzeichnet, dass** die elektrochemischen Zellen zu einem Modul elektrisch verbunden werden.

13. Energieversorgungsvorrichtung (10) nach einem der vorstehenden Ansprüche, **dadurch gekennzeichnet, dass** die Energieversorgungsvorrichtung (10) ein Batteriemanagementsystem aufweist.

14. Energieversorgungsvorrichtung (10) nach einem der vorstehenden Ansprüche, **dadurch gekennzeichnet, dass** die Energieversorgungsvorrichtung (10) wenigstens einen Balancer (Zellen-Ladungszustands-Ausgleicher) aufweist.

15. Energieversorgungsvorrichtung (10) nach einem der vorstehenden Ansprüche, **dadurch gekennzeichnet, dass** die Energieversorgungsvorrichtung (10) für Transport und/oder Lagerung und/oder Ladung mit einem Kühlsystem verbindbar ist.

16. Energieversorgungsvorrichtung (10) nach einem der vorstehenden Ansprüche, **dadurch gekennzeichnet, dass** die Energieversorgungsvorrichtung (10) wenigstens eine erste Umwälzvorrichtung zur passiven Umwälzung des gering kompressiblen Fluids aufweist.

17. Energieversorgungsvorrichtung (10) nach einem der vorstehenden Ansprüche, **dadurch gekennzeichnet, dass** die Energieversorgungsvorrichtung (10) wenigstens eine zweite Umwälzvorrichtung zur aktiven Umwälzung des gering kompressiblen Fluids aufweist.

18. Energieversorgungsvorrichtung (10) nach einem der vorstehenden Ansprüche, **dadurch gekennzeichnet, dass** die Energieversorgungsvorrichtung (10) eine senkrechte mittlere Achse aufweist, wobei die senkrechte mittlere Achse zur Aufnahme der Hauptleitungen und zur freien Konvektion des gering kompressiblen Fluids ausgebildet ist.

## Claims

1. Energy supply device (10) for underwater use, wherein the energy supply device (10) comprises at least one first housing (20), wherein the energy supply device (10) comprises a multiplicity of electrochemical cells, wherein the energy supply device (10) comprises at least one first electrical jack connection on the outer side of the first housing (20), wherein the first housing (20) of the energy supply device (10) is filled bubble-free with a low-compressibility fluid, wherein the first housing (20) comprises a filling device for filling with the low-compressibility fluid and a discharge device for discharging the low-compressibility fluid, wherein the first housing (20) comprises a pressure compensation device (40), **characterized in that** the pressure compensation device (40) is formed by at least one cylindrical pressure equilibration vessel, wherein the pressure equilibration vessel contains a device which maintains an elevated pressure relative to the environment inside the first housing (20).

2. Energy supply device (10) according to Claim 1, **characterized in that** the electrochemical cells are configured in pouch format.

3. Energy supply device (10) according to one of the preceding claims, **characterized in that** the first housing (20) can be stacked in the immersed state.

4. Energy supply device (10) according to one of the preceding claims, **characterized in that** the first housing (20) can be evacuated.

5. Energy supply device (10) according to one of the preceding claims, **characterized in that** the pressure compensation device (40) has an equilibration volume of at most 10%, preferably at most 5%, particularly preferably at most 2% of the internal volume of the first housing (20).

6. Energy supply device (10) according to one of the preceding claims, **characterized in that** components with a high maintenance intensity are arranged outside the first housing (20).

7. Energy supply device (10) according to Claim 6, **characterized in that** power electronics are arranged in a second housing outside the first housing (20), the second housing being configured as a pressure shell.

8. Energy supply device (10) according to one of Claims 1 to 6, **characterized in that** power electronics are arranged in a third housing inside the first housing (20), the third housing being configured as a pressure shell.

9. Energy supply device (10) according to one of the preceding claims, **characterized in that** the pressure compensation device (40) is formed by at least two cylindrical pressure equilibration vessels.

10. Energy supply device (10) according to Claim 9, **characterized in that** the pressure is elevated by less than 10 kPa, preferably by less than 5 kPa.

11. Energy supply device (10) according to one of the preceding claims, **characterized in that** the electrochemical cells respectively have a capacity of from 10 Ah to 100 Ah, preferably between 30 Ah and 50 Ah.

12. Energy supply device (10) according to one of the preceding claims, **characterized in that** the electrochemical cells are electrically connected to form a module.

13. Energy supply device (10) according to one of the preceding claims, **characterized in that** the energy supply device (10) comprises a battery management system.

14. Energy supply device (10) according to one of the preceding claims, **characterized in that** the energy supply device (10) comprises at least one balancer (cell charging state balancer).

15. Energy supply device (10) according to one of the preceding claims, **characterized in that** the energy supply device (10) can be connected to a cooling system for transport and/or storage and/or charging.

16. Energy supply device (10) according to one of the preceding claims, **characterized in that** the energy supply device (10) comprises at least one first circulation device for passive circulation of the low-compressibility fluid.

17. Energy supply device (10) according to one of the preceding claims, **characterized in that** the energy supply device (10) comprises at least one second circulation device for active circulation of the low-compressibility fluid.

18. Energy supply device (10) according to one of the preceding claims, **characterized in that** the energy supply device (10) has a vertical central axis, the vertical central axis being configured in order to receive the primary lines and for free convection of the low-compressibility fluid.

## Revendications

1. Dispositif d'alimentation en énergie (10) pour une utilisation subaquatique, le dispositif d'alimentation en énergie (10) possédant au moins un premier boîtier (20), le dispositif d'alimentation en énergie (10) possédant une pluralité de cellules électrochimiques, le dispositif d'alimentation en énergie (10) possédant au moins une première connexion à enfichage électrique au niveau du côté extérieur du premier boîtier (20), le premier boîtier (20) du dispositif d'alimentation en énergie (10) étant rempli sans bulles d'un fluide faiblement compressible, le premier boîtier (20) possédant un dispositif de remplissage servant au remplissage avec le fluide faiblement compressible et un dispositif d'évacuation servant à l'évacuation du fluide faiblement compressible, le premier boîtier (20) possédant un dispositif de compensation de pression (40), **caractérisé en ce que** le dispositif de compensation de pression (40) est formé par au moins un réservoir d'équilibrage de pression cylindrique, le réservoir d'équilibrage de pression contenant un dispositif qui maintient à l'intérieur du premier boîtier (20) une pression accrue par rapport à l'environnement.

2. Dispositif d'alimentation en énergie (10) selon la revendication 1, **caractérisé en ce que** les cellules électrochimiques sont réalisées au format de poche.

3. Dispositif d'alimentation en énergie (10) selon l'une des revendications précédentes, **caractérisé en ce que** le premier boîtier (20) est empilable à l'état immergé.

4. Dispositif d'alimentation en énergie (10) selon l'une des revendications précédentes, **caractérisé en ce que** le premier boîtier (20) peut être mis sous vide.

5. Dispositif d'alimentation en énergie (10) selon l'une des revendications précédentes, **caractérisé en ce que** le dispositif de compensation de pression (40) présente un volume d'équilibrage égal au maximum à 10 %, de préférence au maximum à 5 %, notamment de préférence au maximum à 2 % du volume interne du premier boîtier (20) .

6. Dispositif d'alimentation en énergie (10) selon l'une des revendications précédentes, **caractérisé en ce que** les composants ayant une intensité de maintenance élevée sont disposés à l'extérieur du premier boîtier (20) .

7. Dispositif d'alimentation en énergie (10) selon la revendication 6, **caractérisé en ce qu'**une électronique de puissance est disposée dans un deuxième boîtier à l'extérieur du premier boîtier (20), le deuxième boîtier étant réalisé sous la forme d'une coque pressurisée.

8. Dispositif d'alimentation en énergie (10) selon l'une des revendications 1 à 6, **caractérisé en ce qu'** une électronique de puissance est disposée dans un troisième boîtier à l'extérieur du premier boîtier (20), le troisième boîtier étant réalisé sous la forme d'une coque pressurisée.

9. Dispositif d'alimentation en énergie (10) selon l'une des revendications précédentes, **caractérisé en ce que** le dispositif de compensation de pression (40) est formé par au moins deux réservoirs d'équilibrage de pression cylindriques.

10. Dispositif d'alimentation en énergie (10) selon la revendication 9, **caractérisé en ce que** la pression est augmentée de moins de 10 kPa, de préférence de moins de 5 kPa.

11. Dispositif d'alimentation en énergie (10) selon l'une des revendications précédentes, **caractérisé en ce que** les cellules électrochimiques possèdent respectivement une capacité de 10 Ah à 100 Ah, de préférence entre 30 Ah et 50 Ah.

12. Dispositif d'alimentation en énergie (10) selon l'une des revendications précédentes, **caractérisé en ce que** les cellules électrochimiques sont reliées électriquement en un module.

13. Dispositif d'alimentation en énergie (10) selon l'une des revendications précédentes, **caractérisé en ce que** le dispositif d'alimentation en énergie (10) possède un système de gestion de batterie.

14. Dispositif d'alimentation en énergie (10) selon l'une des revendications précédentes, **caractérisé en ce que** le dispositif d'alimentation en énergie (10) possède au moins un compensateur (équilibreur d'état de charge de cellules).

15. Dispositif d'alimentation en énergie (10) selon l'une des revendications précédentes, **caractérisé en ce que** le dispositif d'alimentation en énergie (10) peut être relié à un système de refroidissement pour le transport et/ou le stockage et/ou la charge.

16. Dispositif d'alimentation en énergie (10) selon l'une des revendications précédentes, **caractérisé en ce que** le dispositif d'alimentation en énergie (10) possède au moins un premier dispositif de mise en circulation servant à la mise en circulation passive du fluide faiblement compressible.

17. Dispositif d'alimentation en énergie (10) selon l'une des revendications précédentes, **caractérisé en ce que** le dispositif d'alimentation en énergie (10) possède au moins un deuxième dispositif de mise en circulation servant à la mise en circulation active du fluide faiblement compressible.

18. Dispositif d'alimentation en énergie (10) selon l'une des revendications précédentes, **caractérisé en ce que** le dispositif d'alimentation en énergie (10) possède un axe central vertical, l'axe central vertical étant configuré pour accueillir les lignes principales et pour la convection libre du fluide faiblement compressible.
